(19) Europäisches Patentamt

European Patent Office

Office européen des brevets

(11) **EP 4 625 354 A1**

(12) **EUROPEAN PATENT APPLICATION**

(43) Date of publication:
**01.10.2025 Bulletin 2025/40**

(21) Application number: **25164929.9**

(22) Date of filing: **20.03.2025**

(51) International Patent Classification (IPC):
**G06V 10/80** (2022.01)   **G06V 10/82** (2022.01)
**G06V 40/20** (2022.01)

(52) Cooperative Patent Classification (CPC):
**G06V 40/23; G06V 10/803; G06V 10/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2024 US 202463571353 P**
**10.02.2025 US 202519049508**

(71) Applicant: **FUJITSU LIMITED**
**Kawasaki-shi, Kanagawa 211-8588 (JP)**

(72) Inventors:
• **MILACSKI, Zoltán Ádám**
**Pittsburgh, PA, 15213 (US)**
• **KAWAMURA, Ryosuke**
**Santa Clara, CA, 95054 (US)**
• **NIINUMA, Koichiro**
**Santa Clara, CA, 95054 (US)**
• **JENI, Laszlo**
**Pittsburgh, PA, 15213 (US)**
• **DE LA TORRE, Fernando**
**Pittsburgh, PA, 15213 (US)**

(74) Representative: **Hoffmann Eitle**
**Patent- und Rechtsanwälte PartmbB**
**Arabellastraße 30**
**81925 München (DE)**

(54) **GROUNDED HUMAN MOTION GENERATION WITH OPEN VOCABULARY SCENE-AND-TEXT CONTEXTS**

(57)     In an embodiment, a method for human motion generation with open vocabulary scene-and-text context is provided. The method involves receiving an input that includes a 3D point cloud of a scene containing a goal object with a natural language instruction related to the goal object. A text tokenizer is applied to the text to obtain tokenized text, and a text encoder from a pre-trained vision-language model generates text features. First scene features are generated by applying a pre-trained U-Net scene encoder to the 3D point cloud, which are down sampled to obtain second scene features. A conditional latent is obtained by fusing the second scene features with the text features. A conditional motion generator predicts motion parameters for a parametric human body model over a specific time duration. Finally, 3D human meshes for multiple motion frames are obtained based on the motion parameters and the parametric human body model.

FIG. 2

**Description**

CROSS-REFERENCE TO RELATED APPLICATIONS/INCORPORATION BY REFERENCE

This application claims priority to U.S. Provisional Patent Application Serial No. 63/571,353 filed on March 28, 2024, the entire content of which is hereby incorporated herein by reference.

FIELD

The embodiments discussed in the present disclosure are related to human motion generation with open vocabulary scene and text contexts.

BACKGROUND

Generating human motions in 3D indoor scenes based on textual descriptions is challenging, as motion generation requires the joint modeling of the 3D scene, human motion, and natural language. Traditional methods frequently depend on producing 3D human motion that interacts with specified objects in a manner consistent with the given text descriptions. However, generating diverse and semantically consistent human motions in 3D scenes can be costly and time-consuming in real-world scenarios. Additionally, traditional methods exhibit a bias towards generating motions centered within the scene.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of an embodiment, a method for human motion generation with open vocabulary scene and text contexts. The method may include a set of operations which may include receiving an input comparing a 3D point cloud of a scene comprising a goal object, and a text comprising a natural language instruction associated with the goal object The set of operations may further include applying a text tokenizer to the text to obtain a tokenized text and generating text features by applying a text encoder of a pre-trained vision-language model on the tokenized text. The set of operations may further include generating first scene features by application of a pre-trained U-Net scene encoder on the 3D point cloud and down sampling the first scene features to obtain second scene features. The set of operations may further include obtaining a conditional latent based on a fusion of the second scene features with the text features and predicting a sequence of motion parameters for a motion of a parametric human body model towards the goal object for a specific time duration by applying a conditional motion generator on the conditional latent Furthermore, the set of operations may include obtaining 3D human meshes for a plurality of motion frames based on the sequence of motion parameters and the parametric human body model.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an example environment related to human motion generation with open vocabulary scene and text contexts;
FIG. 2 is a block diagram that illustrates an exemplary system for human motion generation with open vocabulary scene and text contexts;
FIG. 3 is a diagram that illustrates a flow chart of pre-training of a U-Net scene encoder;
FIG. 4 is a diagram that illustrates an exemplary architectural diagram of the system for human motion generation with open vocabulary scene and text contexts;
FIG. 5 is a diagram that illustrates an exemplary scenario of inference of the system for human motion generation with open vocabulary scene and text contexts;
FIG. 6 is a diagram that illustrates an exemplary scenario of shared open vocabulary vision-language space with grounding;

FIG. 7 is a diagram that illustrates a flowchart of an example for human motion generation with open vocabulary scene and text contexts,

all according to at least one embodiment described in the present disclosure.

DESCRIPTION OF EMBODIMENTS

Some embodiments described in the present disclosure relate to methods and systems for human motion generation using open vocabulary scene and text contexts. In this disclosure, the system may receive an input comprising a 3D point cloud of a scene with a goal object and a natural language instruction associated with the goal object. A text tokenizer may be applied to the text to obtain tokenized text. Text features may be then generated by applying a text encoder from a pre-trained vision-language model to the tokenized text. Additionally, first scene features may be generated by applying a pre-trained U-Net scene encoder to the 3D point cloud. These first scene features may be down sampled to obtain second scene features. A conditional latent may be obtained by fusing the second scene features with the text features. A sequence of motion parameters for a parametric human body model's movement towards the goal object over a specific time duration may be predicted by applying a conditional motion generator to the conditional latent. Furthermore, 3D human meshes for multiple motion frames may be obtained based on the sequence of motion parameters and the parametric human body model.

Conventional methods for human motion generation involve populating 3D scenes with virtual 3D human motions via textual control. Specifically, these methods model the conditional probability and sequence of human motion parameters-global translation (t), global orientation (r), and body pose (θ)-using a tokenized language description, vocabulary size, and an RGB-colored 3D point cloud. Additionally, conventional methods utilize the differentiable SMPL-X body model to obtain human meshes for each motion frame. However, generating motion through textual control presents several challenges. Users or developers may not have adequate control over the generated motion, leading to a lack of precise control. Human motion generation may be assumed to start from a specific direction or location, resulting in coarse assumptions regarding location. The motion generation may also be biased towards the center of the scene. Pretraining with a closed vocabulary may lead to the prediction of a finite set of labels for each point of a 3D point cloud, which can be limiting. There may also be a mismatch between the text and image embeddings. Although a closed vocabulary may encompass a large dataset, the closed vocabulary often falls short in meeting the demands, resulting in improper grounding.

The present disclosure may address these challenges by grounded human motion generation with open vocabulary scene-and-text contexts. This approach may enable more efficient, accurate, and timely processing of dataset, leading to improved management and optimization of human motion generation. Firstly, the system may be trained to minimize the distance between text embeddings and 3D point cloud scene feature embeddings. Secondly, it may provide a grounding framework for text-and-scene-conditional human motion generation. Thirdly, the system may establish a text-scene alignment in Vision-Language model space (such as CLIP space) by replacing the closed vocabulary scene encoder pretraining with open vocabulary knowledge distillation. Additionally, the system may refine text-scene grounding by fine-tuning the scene encoder with two novel regularization losses that enhance awareness of the category and size of the goal object Lastly, the system may demonstrate substantially improved human motion placement performance during sampling on the dataset for all teacher models.

Embodiments of the present disclosure are explained with reference to the accompanying drawings.

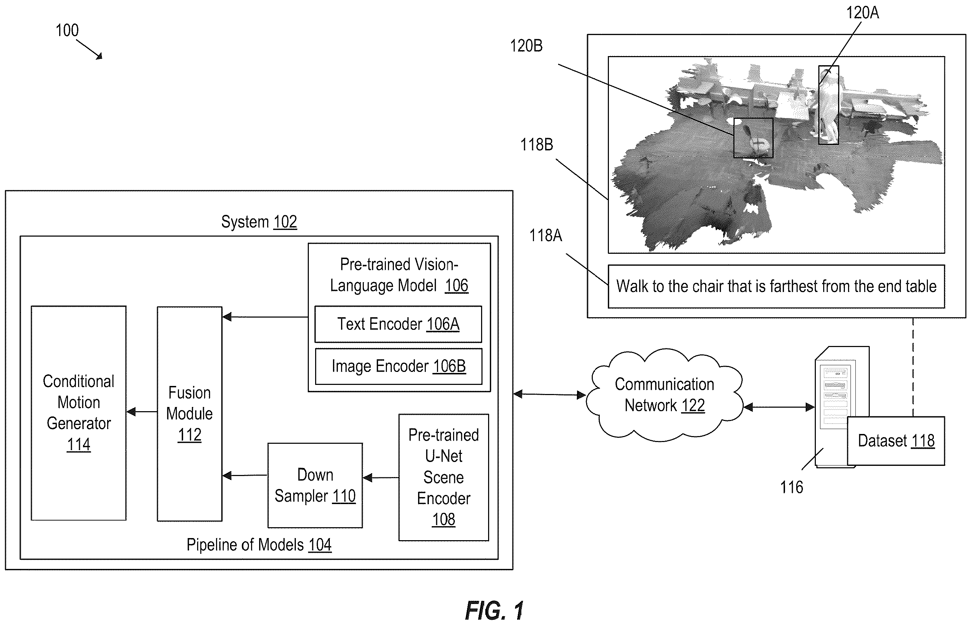

FIG. 1 is a diagram representing an example environment related to human motion generation with open vocabulary scene and text contexts, arranged in accordance with at least one embodiment described in the present disclosure. With reference to FIG. 1, there is shown an environment 100. The environment 100 may include a system 102 that hosts a pipeline of models 104 including a pre-trained vision-language model 106, a pre-trained U-Net scene encoder 108, a down sampler 110, a fusion module 112, and a conditional motion generator 114. The environment 100 may further include a remote server 116 (that may store a dataset 118) and a communication network 122.

As used herein, the term "pre-trained" refers to a model that has been previously trained on a dataset before being fine-tuned or used for inference for a specific task. In the context of the pre-trained vision-language model 106 or the pre-trained U-Net scene encoder 108, the term may mean that the respective model has already learned to recognize patterns and features in both visual and textual data through extensive training on diverse open vocabulary datasets or 3D scene datasets.

The system 102 may include suitable logic, circuitry, and interfaces that may be configured to implement the pipeline of models 104 for text-and-scene-conditional human motion generation. Specifically, the system 102 may acquire an input including a 3D point cloud 118B of a scene and a text 118A comprising a natural language instruction associated with a goal object 120B in the scene. The system 102 may use the pipeline of models 104 to generate 3D human meshes 120A of a parametric human body model for a plurality of motion frames of the scene based on the acquired input. Examples of the system 102 may include, but are not limited to, a computing device, a hardware-based annealer device, a digital-annealer device, a quantum-based or quantum-inspired annealer device, a smartphone, a cellular phone, a mobile phone, a gaming device, a mainframe machine, a server (or a cluster of servers), a computer workstation, and/or a consumer electronic (CE) device.

The pre-trained vision-language model 106 may be a neural network that may be pre-trained on a task of sematic understanding of visual information in images and assigning an open vocabulary text label to the visual information. For instance, the pre-trained vision-language model 106 may be a Contrastive Language-Image Pre-Training (CLIP) model, an Open Vocabulary image captioning model, an Open Vocabulary Image Segmentation model, or an Open Vocabulary 3D Scene Understanding model. As used herein, the term "open vocabulary" refers to a capability of a model to understand and process a wide range of words or terms that are not explicitly included in its training dataset. As an open-vocabulary semantic segmentation model, the pre-trained vision-language model 106 may attempt to accurately assign a semantic label to each pixel in an image based on a set of arbitrary open-vocabulary texts. As a CLIP model, the pre-trained vision-language model 106 may be a multi-modal vision and language model that may map image and text pairs to the same latent space. For example, the pre-trained vision-language model 106 may use a vision transformer to encode images of the scene and a text encoder to encode the text 118A into a common embedding space for comparison and retrieval.

In an example embodiment, the open vocabulary image segmentation model may be designed to partition the image of the scene into meaningful regions based on arbitrary text descriptions. The method involves segmenting images into semantically meaningful segments and classifying such segments with flexible, text-defined categories, which may not have been seen during training. Similarly, the Open Vocabulary 3D Scene Understanding model may be designed to understand and interpret images without being limited to a predefined set of object categories. The open vocabulary scene understanding models leverage large vision-language models (VLMs) and other multi-modal foundation models to enable querying and recognizing arbitrary object classes.

The pre-trained vision-language model 106 may include a text encoder 106A and an image encoder 106B. The text encoder 106A may receive a tokenized text as the input. The text encoder 106A may convert the tokenized text into a text embedding. The tokenized text may be obtained by applying a tokenizer on the text received by the system 102. The text 118A may include a natural language instruction such as "walk to the chair that is farthest from the end table". The end table may be the goal object 120B, for example.

The tokenization of the text may convert the text (such as the text 118A) into a sequence of tokens that may be processed by the pre-trained vision-language model 106. The tokenized text may be then passed through the text encoder 106A such as a transformer model that may process the tokenized text to generate embeddings for the tokenized text.

The embeddings from the transformer model may be vector embeddings that may be projected into a common embedding space shared with the image encoder 106B. The shape of the text embeddings be equal to the shape of the embeddings produced by the image encoder 106B. During training, the text encoder 106A may be configured to capture the semantics of the text and align the text features with image features extracted by the image encoder 106B (from images), enabling the pre-trained vision-language model 106 to understand and generate text descriptions for images.

The image encoder 106B may receive an image input, such as images (e.g., multi-view images) corresponding to 3D points or objects in a 3D points cloud of a scene. The image encoder 106B may process each received image through a convolutional neural network (like ResNet), a Vision Transformer (ViT), or a suitable neural network-based encoder to generate an image features vector. The image feature vector may be a structured representation that encapsulates meaningful content and attributes of an image. The image feature vector may translate visual information in the image into a format that may be understood and/or processed by other methods, enabling the extraction of semantic concepts such as objects, scenes, context, or activities depicted in the image. The image encoder 106B may be trained jointly with the text encoder 106A to map images and text into a shared latent space.

For text-and-scene-conditional human motion generation, the system 102 may utilize the text encoder 106A during the finetuning stage or post the finetuning stage (i.e., during the inference stage) of the pre-trained U-Net scene encoder 108. Similarly, the system 102 may utilize the image encoder 106B before the finetuning stage (i.e., in a pre-training stage of the pre-trained U-Net scene encoder 108).

The pre-trained U-Net scene encoder 108 may be applied on an acquired input, such as the 3D point cloud 118B for generating a first scene feature. The first scene feature may represent the 3D point cloud 118B as compact, high-dimensional vectors that capture the essential geometric and spatial characteristics of the scene depicted in the 3D point cloud 118B. The first scene feature may also include hierarchical information that represent the scene's structure and spatial relationships between 3D points or 3D objects in the scene for further analysis or processing.

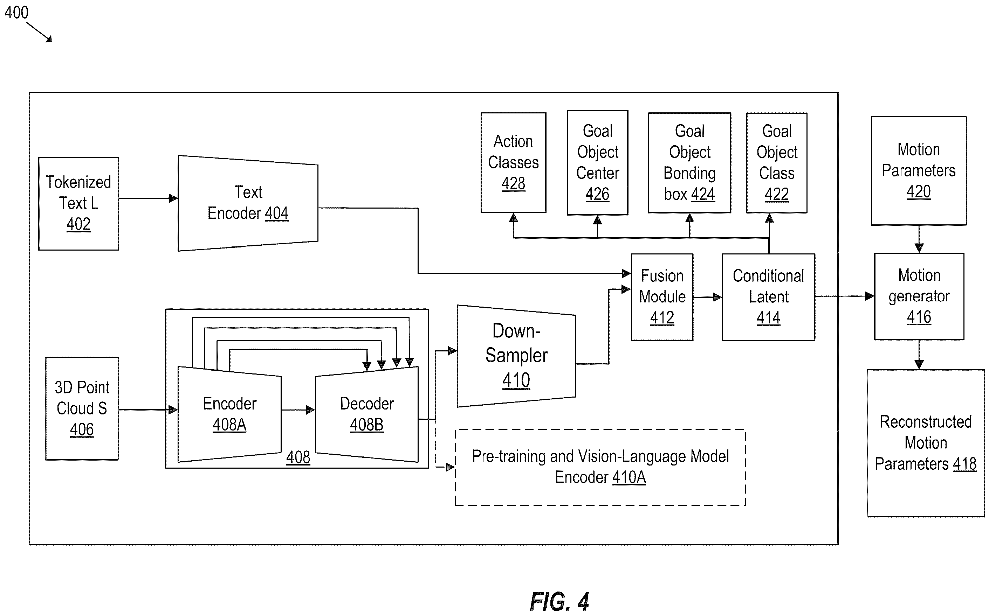

The pre-trained U-Net scene encoder 108 may include a pair of encoder and decoder that may be pre-trained on a dataset of 3D scene data and image pairs before being used in the pipeline of models 104 for the text-and-scene-conditional human motion generation. In an exemplary embodiment, the pre-trained U-Net scene encoder 108 may be an encoder-decoder network that may be based on a Point Transformer. Specifically, the pre-trained U-Net scene encoder 108 may integrate self-attention mechanisms of the Point Transformer into the U-Net architecture to effectively process point cloud data (such as the 3D point cloud 118B). The encoder (shown in FIG. 4 as encoder 408A) of the pre-trained U-Net scene encoder 108 may consist of Point Transformer blocks that down sample the point cloud data while capturing spatial relationships. The bottleneck layer of the pre-trained U-Net scene encoder 108, also a Point Transformer block, may extracts high-level features. The decoder (shown in FIG. 4 as decoder 408B) may then up sample these features back to the original resolution using additional Point Transformer blocks, with skip connections from the encoder to preserve spatial information. By way of example, and not limitation, the pre-trained U-Net scene encoder 108 may include five (5) encoder stages, each consisting of a transition down module and a varying number of point transformer blocks (2, 3, 4, 6 and 3, respectively). The decoder component may contain five (5) stages with a transition up module and two (2) point transformer blocks in each. The output head on the decoder component may include a ReLU activation and a linear layer with F units. Each point transformer block may incorporate a Self-Attention layer, linear projections, and a residual skip connection.

In accordance with an embodiment, the pre-trained U-Net scene encoder 108 may be finetuned for text-and-scene-conditional human motion generation based on losses including two regularization losses associated with a category of a goal object 120B and a size of the goal object 120B.

The down sampler 110 may include logic, interfaces, and/or code configured to perform down sampling of the first scene features to obtain second scene features. For instance, the down sampler 110 may randomly select a set of point feature vectors from a plurality of point feature vectors included in the first scene features. Further, the down sampler 110 may calculate a distance between each point feature vector of the set of point feature vectors and other point feature vectors in the plurality of point feature vectors. Around each point feature vector of the set of point feature vectors, the down sampler 110 may select a set of k-nearest neighboring vectors from the plurality of point feature vectors based on the distance. Further, the down sampler 110 may apply an average pooling operation on the set of k-nearest neighboring vectors around each point feature vector of the set of point feature vectors to obtain a plurality of average pooled vectors. The second scene features may include the plurality of average pooled vectors.

The fusion module 112 may include logic, interfaces, and/or code configured to obtain a fused feature, which may be used for the generation of a conditional latent. The fusion module 112 may concatenate the second scene features with the text features to obtain a concatenated feature. Further, the fusion module 112 may apply a self-attention layer on the concatenated feature to obtain a fused feature.

The conditional motion generator 114 includes logic, interfaces, and/or code configured to obtain 3D human meshes 120A for a plurality of motion frames. The conditional motion generator 114 may be applied on the generated conditional latent to predict the sequence of motion parameters for a motion of the parametric human body model towards the goal object (such as the goal object 120B) for a specific time duration. Based on the sequence of motion parameters and the parametric human body model, the conditional motion generator 114 may obtain 3D human meshes 120A for the plurality of motion frames.

As used herein, the term "parametric human body model" may refer to a computational model used to represent human bodies with high realism. The model may use parameters to adjust body shape and pose, include detailed anatomy of the face, hands, and body, and deform smoothly with movement As an example, the parametric human body model may be an SMPL-X (Skinned Multi-Person Linear Model - eXtended) or a variant thereof.

The remote server 116 may include logic, interfaces, and/or code configured to store the dataset 118 comprising text-3D data pairs (such as the text 118A and 3D point cloud 118B). In at least one embodiment, the remote server 116 may be implemented as a plurality of distributed cloud-based resources by use of several technologies that are well known to those ordinarily skilled in the art In certain embodiments, the functionalities of the remote server 116 may be incorporated in its entirety or at least partially in the system 102, without a departure from the scope of the disclosure.

The dataset 118 may be stored or cached on a device such as the remote server 116 or the system 102. The dataset 118 comprises the text 118A and the 3D point cloud 118B associated with a scene comprising the goal object 120B in form of a table or a group of tables in the remote server 116, or the system 102. The 3D point cloud 118B may include a scene comprising the goal object 120B and the 3D human meshes 120A. For example, the goal object 120B may be any physical object in the 3D point cloud. The physical object may include at least one of a chair, a table, a blackboard, a television, or the like. The dataset 118 may be hosted on multiple servers at the same or distinct locations. Operations of the dataset 118 may be executed using hardware including a processor, a microprocessor (e.g., to perform or control performance of one or more operations), a field-programmable gate array (FPGA), or an application-specific integrated circuit (ASIC).

The communication network 122 may include various communication media through which the system 102 may communicate with remote server 116 or other devices. Examples of the communication network 122 may include, but are not limited to, the Internet, a cloud network, a Wireless Fidelity (Wi-Fi) network, a Personal Area Network (PAN), a Local Area Network (LAN), a cellular network (such as, a Long-term evolution (or 4G) cellular network or a 5G cellular network), a satellite network (such as a network of low earth orbit satellites), and/or a Metropolitan Area Network (MAN)). Various devices in the environment 100 may connect to the communication network 122 using various wired and wireless communication protocols, including TCP/IP, UDP, HTTP, FTP, ZigBee, EDGE, IEEE 802.11, Li-Fi, IEEE 802.16, multi-hop communication, wireless access point (AP), device-to-device communication, cellular communication protocols, and Bluetooth®.

During operation, the system 102 may receive the input comprising the 3D point cloud 118B of a scene comprising the goal object 120B, and the text 118A comprising a natural language instruction associated with the goal object 120B. In accordance with an embodiment, the input may be retrieved from the dataset 118 stored on the remote server 116 or the system 102. In accordance with another embodiment, the system 102 may receive the input via a User Interface rendered on a user device (not shown). The User Interface may include a text input to enter the natural language instruction and an option to upload the 3D point cloud 118B or perform a 3D scan of the scene for acquisition of the 3D point cloud 118B. The user interface may be part of a software application such as an animation software or a robotics software.

Based on the input, the system 102 may implement the pipeline of models 104 for a text-and-scene-conditional generation task. The task involves leveraging both textual and scene conditions simultaneously, necessitating grounding between the two modalities. Specifically, the objective of the task is to identify the goal object (such as the goal object 120B) among multiple instances of the same object class within complex 3D scenes (such as the 3D point cloud 118B, guided by textual descriptions (such as the text 118A) of spatial relationships, and subsequently generate human motion (such as 3D human meshes 120A) to interact with the goal object 120B. The interaction may include, for example, a movement towards the goal object 120B.

In some cases, the task may be defined with the objective to populate 3D scenes with virtual 3D human motions via textual control. Specifically, the pipeline of models 104 may be trained to model a conditional probability $p(\Theta|L,S)$, where $\Theta = \{t, r, \theta\} \in R^{T \times (3+6+J \cdot 3)}$ denotes a sequence of human motion parameters (global translation t, global orientation r, body pose $\theta$) of length T, $L \in Z^{W \times V}$ is a tokenized language description of length W and vocabulary size V, and $S \in R^{N \times 6}$ is an RGB-colored scene point cloud. further use the parametric human body model (e.g., a differentiable SMPL-X body model) to obtain human meshes for each motion frame, $Mt = M(\Theta_t, \beta) \in R^{10,475 \times 3}$, where M is linear blend skinning and $\beta \in R^{10}$ is the body shape.

Details of implementation of the pipeline of models 104 and associated training/fine tuning are described herein. The system 102 may apply the text tokenizer to the received text to obtain the tokenized text. For example, the text tokenizer may be a function that may break unstructured text such as the text 118A into smaller units known as tokens. The tokens may be words, characters, sub words, or sentences, depending on the type of tokenization being performed. The tokenization may be crucial step in natural language processing tasks, as tokenization helps in building context and meaning for the system 102 by converting text into a format that may be easily processed and analyzed.

In another aspect, the system 102 may generate the text features by applying the text encoder 106A of the pre-trained vision-language model 106 on the tokenized text. The text encoder 106A may be, for example, a transformer-based text encoder. As another example, the text encoder 106A may be a text encoding component of an open vocabulary image segmentation model or a CLIP model. The text encoder 106A may process the tokenized text and may convert the tokenized text into text embeddings. The text embeddings may include the semantic meaning of the text corresponding to the image of the scene comprising the goal object 120B.

The system 102 may generate the first scene features by applying the pre-trained U-Net scene encoder 108 on the 3D point cloud 118B. The generated first scene features may include a plurality of point feature vectors. In an embodiment, the pre-trained U-Net scene encoder 108 may be a Point Transformer-based neural network (both encoder and decoder blocks with residual skip connections) to compute scene features for each 3D point of the 3D point cloud 118B. For instance, the system 102 may feed position and color information of each 3D point of the 3D point cloud 118B to the pre-trained U-Net scene encoder 108 to generate the first scene features that may include a point feature vector for each 3D point of the 3D point cloud 118B.

Since U-Net extracted features (i.e., the first scene features) may be generated from all N points of the 3D point cloud 118B, the output features (i.e., the first scene features) have a C x N dimension. It may not be feasible to take all points into consideration for the fusion module 112. Therefore, the down sampler 110 may be used, as described herein. The system 102 may use the down sampler 110 to down sample the first scene features to obtain the second scene features. Specifically, the down sampler 110 may be a logic block that may transform the first scene features by resampling the first scene features to a lower dimension. For example, the down sampler 110 may reduce the number of points from 32,768 in the first scene features to 2,048 in the second scene features by averaging features across k = 16 nearest neighbors.

In an example embodiment, the down sampling may be performed using a k-nearest neighbor classifier. The down sampling may involve farthest point sampling and average pooling across k-nearest neighbors. Initially, the system 102 may randomly select a set of point feature vectors from the plurality of feature vectors and may calculate a distance between each point feature vector of the set of point feature vectors and other point feature vectors in the plurality of point feature vectors. Further, based on the calculated distance, the system 102 may select a set of k-nearest neighboring vectors from the plurality of point feature vectors around each point feature vector of the set of feature vectors. The system 102 may obtain a plurality of average pooled vectors by applying an average pooling operation on the set of k-nearest neighboring vectors around each point feature vector of the set of point feature vectors.

The fusion module 112 may concatenate the second scene features with the text features to obtain a concatenated feature. Further, fusion module 112 may apply a self-attention layer on the concatenated feature to obtain the fused feature. The conditional latent may be generated based on the fused feature. For example, resulting point features (i.e., the fused feature) and associated scene coordinates may be passed through dense ReLU and linear layers to obtain a fused scene feature. Finally, the fused scene and text features may be concatenated with the parametric body model and transformed by a linear layer to generate the conditional latent. As used herein, the term "conditional latent" may refer to compound information of action, interacting object, and 3D scene context from two different modalities (i.e., the text 118A and the 3D point cloud 118B). In the context of a Conditional Variational Autoencoder (cVAE), the conditional latent (z) may not be sampled from a simple Gaussian distribution but from a distribution that may be conditioned on the input 3D point cloud 118B and the output segmentation. The conditional latent may allow the pre-trained U-Net scene encoder 108 to learn complex and informative latent space that may capture the variability and uncertainty in the dataset 118.

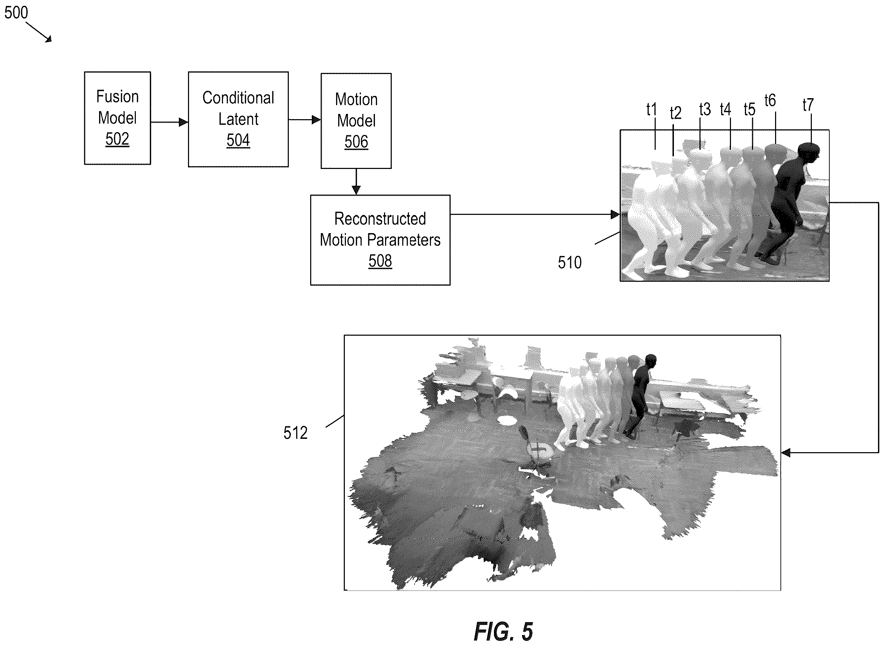

By applying the pipeline of models 104 on the conditional latent, the system 102 may predict a sequence of motion parameters (as shown at 510 in the FIG. 5) for a motion of a parametric human body model towards the goal object 120B for a specific time duration (e.g., 10 timesteps). The sequence of motion parameters may include parameters associated with a global translation, a global orientation, and a body pose associated with the parametric body model. Also, the sequence of motion parameters 120 may be predicted for the specific time duration (T) to determine a plurality of motion frames.

In accordance with an embodiment, the system 102 may obtain 3D human meshes 120A for the plurality of motion frames based on the sequence of motion parameters and the parametric human body model. Specifically, the predicted sequence of motion parameters (for 1...T timesteps) may be mapped to the parametric human body model to generate the plurality of motion frames (for 1...T timesteps). The mapping for each timestep may result in a motion frame consisting of the parametric human body model in a particular motion state (walk, sit, or lie down). For example, the parametric body model may be sitting at time t=1 in one motion frame, standing at time t=2 in another motion frame, and so on.

In accordance with an embodiment, the pre-trained U-Net scene encoder 108 may be finetuned for text-and-scene-conditional human motion generation based on losses including two regularization losses associated with a category of the goal object 120B and a size of the goal object 120B (as shown in FIG 4 and FIG 5).

In an embodiment, the parametric human body model may be the SMPL-X (SMPL eXpressive). The SMPL-X may be a unified body model that jointly models the human body, face, and hands. The SMPL-X may use standard vertex-based linear blend skinning with learned corrective blend shapes, which may have 10,475 vertices and 54 joints, which includes joints for the neck, jaw, eyeballs, and fingers. The SMPL-X may be defined by a function M ($\theta$, $\beta$, $\psi$), where $\theta$ represents the pose parameters, $\beta$ the shape parameters, and $\psi$ the facial expression parameters.

In another embodiment, the process of generating human motion based on text and scene conditions involves identifying the goal object 120B among multiple objects in the 3D point cloud 118B using the text description (such as, the text 118A). Additionally, this process includes generating human motion that references or interacts with the identified goal object 120B. The generation of human motion is also influenced by the text description (such as the text 118A).

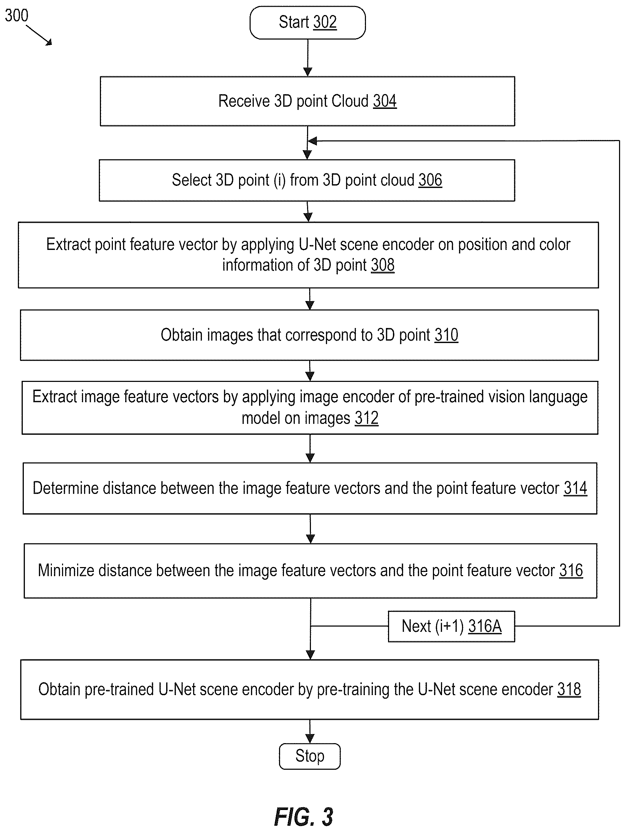

Furthermore, this process involves combining the second scene feature and the text feature using open vocabulary image segmentation. The process also incorporates two regularization losses related to the category of the goal object 120B and size of the goal object 120B. Details related to the human motion generation are provided in FIG. 3 to FIG. 6, for example.

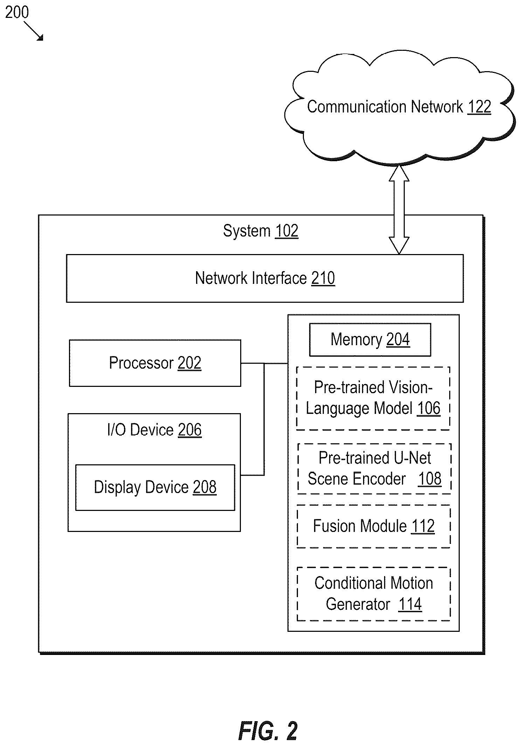

FIG. 2 is a block diagram that illustrates an exemplary system for human motion generation with open vocabulary scene and text contexts, arranged in accordance with at least one embodiment described in the present disclosure. FIG. 2 is explained in conjunction with elements from FIG. 1. With reference to FIG. 2, there is shown a block diagram 200 of the system 102. The system 102 may include a processor 202, a memory 204, an I/O device 206, and a network interface 210. The I/O device 206 may include a display device 208, for example. The memory 204 may store the pre-trained vision-language model 106, the pre-trained U-Net scene encoder 108, the fusion module 112, and the conditional motion generator 114.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device, including various computer hardware or software modules, and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure. Additionally, one or more of the processors may be present on one or more different systems, such as different remote servers.

In some embodiments, the processor 202 may be configured to interpret and/or execute program instructions and/or process data stored in the memory 204. After the program instructions are loaded into memory 204, the processor 202 may execute the program instructions. Some of the examples of the processor 202 may be a Graphical Processing Unit (GPU), a Central Processing Unit (CPU), a Reduced Instruction Set Computer (RISC) processor, an Application-Specific Integrated Circuit (ASIC) processor, a Complex Instruction Set Computer (CISC) processor, a coprocessor, and/or a combination thereof.

The memory 204 may include suitable logic, circuitry, and/or interfaces that may be configured to store program instructions executable by the processor 202. In certain embodiments, the memory 204 may be configured to store information such as but not limited to the dataset comprising the 3D point cloud of a scene comprising the goal object, and the text comprising the natural language instruction associated with the goal object. The memory 204 may further store the pre-trained vision-language model 106, the pre-trained U-Net scene encoder 108, the fusion module 112, and the conditional motion generator 114. In some respects, the pre-trained vision-language model 106, the pre-trained U-Net scene encoder 108, the fusion module 112, and the conditional motion generator 114 may be placed out of the memory 204. The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O device 206 may include suitable logic, circuitry, interfaces, and/or code that may be configured to receive a user input The I/O device 206 may be further configured to provide an output in response to the user input The I/O device 206 may include various input and output devices, which may be configured to communicate with the processor 202 and other components, such as the network interface 210. Examples of the input devices may include, but are not limited to, a touch screen, a keyboard, a mouse, a joystick, and/or a microphone. Examples of the output devices may include, but are not limited to, a display device 208 and a speaker. The I/O device 206 may be configured within the system 102 or outside of the system 102.

The network interface 210 may communicate with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

In certain embodiments, the system 102 may include the pipeline of models 104, the remote server 116 and the dataset 118. Modifications, additions, or omissions may be made to the system 102, without departing from the scope of the present disclosure. For example, in some embodiments, the system 102 may include any number of other components that may not be explicitly illustrated or described. The system 102, including the pipeline of models 104, is described in detail in FIG. 3, FIG. 4, FIG. 5, FIG. 6, and FIG. 7.

FIG. 3 is a diagram that illustrates a flow chart of pre-training of a U-Net scene encoder, in accordance with an embodiment of the disclosure. FIG. 3 are described in conjunction with elements from FIG. 1 and FIG. 2. With reference to FIG. 3, an execution flow 300 is shown. The exemplary execution flow 300 may include a set of operations from 302 to 320 that may be executed by one or more components of FIG. 1, such as the system 102. The operations may start at 302 and proceed to 304.

At 304, a 3D point cloud reception operation may be performed. A U-Net scene encoder may be configured to receive the 3D point cloud (such as the 3D point cloud 118B). In an example embodiment, the received 3D point cloud 118B of the scene may include the goal object 120B. The U-Net scene encoder may have the same network architecture as that of the pre-trained U-Net scene encoder 108, with randomly initialized weights. In some instances, the U-Net scene encoder may be referred to as an untrained version of the pre-trained U-Net scene encoder 108.

At 306, a 3D point selection operation may be performed. The system 102 may be configured to perform a 3D point selection from the 3D point cloud in the first pass. The selected 3D point from the 3D point cloud may include position and color information for detection of the goal object 120B. The color information may be in RGB format, for example.

At 308, a point feature vector extraction operation may be performed. The U-Net scene encoder may be applied on position and color information of the selected 3D point to extract the point feature vector. In an example embodiment, the U-Net scene encoder may be a Point Transformer-based encoder-decoder neural network.

At 310, images may be obtained. The system 102 may obtain images corresponding to the selected 3D point. The obtained images may be single view or multi view images of the same scene from a viewpoint that includes the selected 3D point of the 3D point cloud.

At 312, image feature vectors extraction may be performed. The image encoder 106B of the pre-trained vision-language model 106 may be applied on the obtained images. The image encoder 106B may extract the image feature vectors associated with the obtained images. For example, the image encoder 106B of the pre-trained vision-language model 106 may be an open vocabulary image segmentation model that may be applied on the obtained images to extract the image feature vectors.

At 314, a distance may be determined. The system 102 may be configured to determine the distance between the point feature vectors and the image feature vectors.

At316, the distance may be minimized. The system 102 may be configured to minimize the distance between the image feature vectors and the point feature vector. At 316A, If the distance between the image feature vectors and the point feature vector is greater than a threshold, then the U-Net scene encoder (such as the pre-trained U-Net scene encoder 108) may re-execute the steps from 306 to 316 by increasing the counter (i) by 1 (i.e. i+1) and shifting the process to the second pass. The second pass process starts with selecting another 3D point from the 3D point cloud.

In an embodiment, the open vocabulary image segmentation model may be integrated as the teacher to train the U-Net scene encoder and obtain the pre-trained U-Net scene encoder 108. For minimizing the distance between the image feature vectors and the text feature vector, the system 102 may freeze the text encoder parameters of the open vocabulary image segmentation model.

In an embodiment, the distance between the image feature vectors and the point feature vectors may be minimized by maximizing the cosine similarity between the image feature vectors and the point feature vectors. The cosine similarity may be computed based on open vocabulary open scene loss, as given by equation (1). The open vocabulary open scene loss may be used to train the U-Net scene encoder. For example, the open vocabulary open scene loss may be calculation may be given by following equations (1), as follows:

$$l_{cos} = 1 - \cos\left(\frac{1}{R} \sum_{j=1}^{R} [\varepsilon^{2D}(I_j)]_{(S_{.,:}3P_j),\,.}, \varepsilon^{3D}(S)\right) \qquad (1)$$

where, $\varepsilon^{2D}$ represents the per-pixel encoder of an open vocabulary image segmentation model with feature size F;
$I_j \in R^{H \times W}$ is the jth of R 2D viewpoint images;
$P_j \in R^{3 \times 2}$ is the jth view projection matrix;
S is the 3D point cloud;
$\varepsilon^{3D}$ represents the U-Net (encoder and decoder with residual skip connections)

At 318, the pre-trained U-Net scene encoder 108 may be obtained. The U-Net scene encoder may be trained until the distance (as shown in equation (1), for example) between the image feature vectors and the point feature vector is a minimum. Once the distance between the image feature vectors and the point feature vector is at minimum, the pre-trained U-Net scene encoder 108 may be obtained.

In an embodiment, the U-Net scene encoder may be pretrained with the losses to achieve multimodal alignment with the text encoder 106A of the pre-trained vision-language model 106. For example, the point feature vectors ($f^{3d}$) may be extracted by application of the U-Net scene encoder on position and color information of the 3D point, and the image feature vectors ($f^{2d}$) may be extracted by application of an image encoder of the CLIP. The CLIP-based image encoder may have extracted image feature vector ($f^{2d}$) that may be close to the corresponding text 118A in the embedding space. Thus, when the system 102 minimizes the distance between the point feature vectors ($f^{3d}$) and the image feature vectors ($f^{2d}$), the U-Net scene encoder may be trained using the distance to learn a shared embedding share where the point feature vectors ($f^{3d}$) are close to the corresponding text 118A or image feature vectors ($f^{2d}$) in the shared embedding space.

FIG. 4 is a diagram that illustrates an exemplary architectural diagram of the system for human motion generation with open vocabulary scene and text contexts, in accordance with an embodiment of the disclosure. FIG. 4 is described in conjunction with elements from FIG. 1, FIG. 2, and FIG. 3. The exemplary architecture of the system 102 shows the human motion generation illustrated in the exemplary environment 400 may be implemented by any suitable system, apparatus, or device, such as the example system 102 of FIG. 1 or processor 202 of FIG. 2.

The system 102 may receive an input comprising a 3D point cloud (S) 406 of a scene and the text 118A. The 3D point cloud (S) 406 of the scene may include the goal object 120B. The text 118A may include the natural language instruction associated with the goal object 120B. For example, the natural language instruction may refer to the use of natural language (as spoken and written by humans) to describe tasks, guide actions, or provide constraints. The natural language instruction may be embedded into models such as, the pre-trained vision-language model 106 to enable the pre-trained vision-language model 106 to interpret and follow the instructions included in the text 118A accurately. Thus, the pre-trained vision-language model 106 may be generalized and perform tasks based on the linguistic instructions provided in the text 118A. Further, the system 102 may apply the text tokenizer to the text 118A to obtain a tokenized text (L) 402.

The system 102 may generate text features by applying a text encoder 404 of the pre-trained vision-language model 106 on the tokenized text (L) 402. The text features may be generated by passing the tokenized text (L) 402 through the text encoder 404 (e.g., transformer-based encoder). The text encoder 404 may process the tokenized text (L) 402 sequentially and converts the tokenized text (L) 402 into text embeddings. The text embeddings may include the semantic meaning of the text corresponding to the 3D point cloud (S) 406 of the scene comprising the goal object 120B. In an embodiment, the text encoder 404 of the pre-trained vision-language model 106 may be an open vocabulary sematic segmentation text encoder. For example, the open vocabulary sematic segmentation may involve labeling each point of the 3D point cloud with a semantic category of the goal object 120B (or open-vocabulary texts). The open vocabulary sematic segmentation may not be limited to a predefined set of classes of the goal object 120B but may be handled with a wide range of text descriptions that allows for identification and classification of goal object 120B in the 3D point cloud based on any input text (such as text 118A).

The system 102 may generate first scene features by application of a pre-trained U-Net scene encoder 408 on the 3D point cloud (S) 406. The generated first scene features may include a plurality of point feature vectors. The U-Net may be shaped like a letter U, with the encoder 408A, the decoder 408B, and skip connections coupling the encoder 408A with the decoder 408B. The pre-training of the encoder may help the encoder to learn useful features from a vast amount of data, which may then be fine-tuned for specific tasks. The pre-trained U-Net scene encoder 408 may be based on Point Transformers and may be used to extract semantic information from input 3D point cloud (S) 406 of the scene, transforming the 3D point cloud (S) 406 of the scene into latent representation vectors.

In an embodiment, the system 102 may generate the first scene features by feeding the position and the color information of each 3D point of the 3D point cloud to the pre-trained U-Net scene encoder 408. The first scene features may include a point feature vector for each 3D point of the 3D point cloud.

The system 102 may use the down sampler 410 to down sample the first scene features. Further, based on the down sampling performed by the down sampler 410 of the system 102, the system 102 may obtain second scene features. For the down sampling of the first scene features, the down sampler 410 may randomly select a set of point feature vectors from the plurality of point feature vectors included in the first scene features. Further, the down sampler 410 may calculate a distance between each point feature vector of the set of point feature vectors and other point feature vectors in the plurality of point feature vectors. Around each point feature vector of the set of point feature vectors, the down sampler 410 may select a set of k-nearest neighboring vectors from the plurality of point feature vectors based on the distance. For example, the k-nearest neighboring vectors may be the "k" closest data points to a query point in a vector space and may be measured by a specified distance metric such as Euclidean distance. The query point may be a vector that may represent the data point for which the nearest neighbors may be determined. The query point may be used as the input in a k-NN (k-nearest neighbor) search to identify and retrieve the most similar vectors from the dataset 118 based on a defined similarity metric. The k-nearest neighbors may identify 3D points based on the proximity of the 3D points to the query point

Further, the down sampler 410 of the system 102 may apply an average pooling operation on the set of k-nearest neighboring vectors around each point feature vector of the set of point feature vectors to obtain a plurality of average pooled vectors. In an embodiment, the plurality of average pooled vectors may form the second scene features. Each average pooler vector may replace the original set of k-nearest neighboring vectors, resulting in down sampled (pooled) scene features.

In an embodiment, the down sampling may include point sampling and average pooling across k-nearest points. The down sampler 110 may perform a k-nearest neighbor classification. In k-nearest neighbor classification the feature vectors located in the neighborhood may be assumed to be the same object Thus, down sampled may be performed by average pooling across k-NN points. For instance, the k-nearest neighbor classification may be a non-parametric, instance-based learning used in classification of tasks. The k-nearest neighbor classification process may find the k-nearest neighbors to the query point and predict the class of the query point based on the majority vote of its neighbors' classes. The value of k may be a positive integer. Further, the k-nearest neighbor classifier may assume that similar data points exist in proximity.

In an embodiment, the down sampling of the first scene feature may be required as the pre-trained U-Net scene encoder 408 may have extracted features from all N points of the 3D point cloud and the output scene features (i.e., first scene features) may be of C x N dimension. Here, N may be the number of points in the 3D point cloud 118B. Thus, it may not be feasible to take all points into consideration for a fusion module 412.

The system 102 may use the fusion module 412 to fuse the second scene features with the text features. The fusion module 412 of the system 102 may concatenate the second scene features with the text features to obtain a concatenated feature. Further, the fusion module 412 may apply a self-attention layer on the concatenated feature to obtain a fused feature. For instance, the self-attention layer may compute a single-head or a multi head self-attention of the input such as, the concatenated features. The self-attention layer may capture dependencies and relationships within the concatenated features input The self-attention mechanism may transform the concatenated features input sequence into three vectors: query, key, and value. Further, the self-attention layer may use the three vectors to determine the importance of each feature of the concatenated feature in the sequence relative to others. Thus, the self-attention allows the fusion module 412 to understand the context and assign appropriate weights to each feature of the concatenated features based on relevance. Further, a conditional latent 414 may be generated based on the fused feature. In an embodiment, the fusion module 412 may pass the concatenated feature and the position information of each 3D point of the 3D point cloud through dense ReLU and linear layers to obtain the fused features.

The system 102 may take the tokenized text (L) 402 and the 3D point cloud (S) 406 as an input and provide the conditional latent 414 as an output The conditional latent 414 may be denoted by $Z_c$. Further, the output condition may be given by the following equation (2), as follows:

$$Z_c = \text{Cond}_\omega(S, L) \qquad (2)$$

The system 102 may apply a conditional motion generator 416 on the conditional latent 414 to predict a sequence of motion parameters for a motion of the parametric human body model towards the goal object 120B for a specific time duration.

The conditional motion generator 416 may be a combination of a motion encoder and motion decoder. The motion encoder of the conditional motion generator 416 may be denoted by $\text{Enc}_\psi$. Further, the motion encoder of the conditional motion generator 416 may include a bidirectional Gated Recurrent Units (GRU) layer concatenated with conditional latent 414, a residual block, and linear output layers for the mean and covariance parameters of the Gaussian distribution. Further, a reparameterization may be applied to sample the conditional latent 414 (the sampled conditional latent may be denoted by "Z"). The bidirectional GRU layer may be a type of sequence processing model that consists of two Gated Recurrent Units (GRUs). The Bidirectional GRU processes the input sequence such as the conditional latent 414 in two directions: one GRU processes the sequence from the beginning to the end (forward direction), and the other GRU processes the sequence from the end to the beginning (reverse direction). The outputs from both directions may be then concatenated to produce the final output The bidirectional approach of the GRU allows the conditional motion generator 416 to capture information from both the past and the future of the input sequence, thus making the conditional motion generator 416 understand the context of the entire sequence, such as a natural language processing or speech recognition.

In an embodiment, the motion decoder of the conditional motion generator 416 may be denoted by "Dec$_\phi$". Further, the motion decoder of the conditional motion generator 416 may combine the conditional latent 414 ($Z_c$) and the sampled conditional latent (Z) using a linear layer, and by utilizing a sinusoidal positional embedding, a transformer decoder, and a linear output layer. For example, the linear layer may be a connected layer or a dense layer, which may be a fundamental building block in the neural networks where each input may be connected to each output by a weight The linear layer performs a linear transformation on the input data. Further details related to linear layer are omitted for the sake of brevity. Further, the sinusoidal positional embedding may be used to encode the position of tokens in a sequence by using sine and cosine functions. Furthe, each dimension of the positional embedding corresponds to a sinusoid with a different frequency. This ensures that the positional values are bounded between 0 and 1, regardless of the sequence length (sequence such as, the fused features or the concatenated fused features and the text feature). The sinusoidal pattern allows the model to generalize to sequences of different lengths and recognize patterns across various positions within the data. Further details related to sinusoidal positional embedding are omitted for the sake of brevity.

In an embodiment, the conditional motion generator 416 may use motion parameters 420 (i.e., initial parameters) and the conditional latent 414 to provide reconstructed motion parameters 418. The reconstructed motion parameters 418 may be the predicted sequence of motion parameters for a motion of the parametric human body model.

The pre-trained U-Net scene encoder 408 may be finetuned for text-and-scene-conditional human motion generation based on losses including two regularization losses associated with the category of the goal object 120B and the size of the goal object 120B.

In an embodiment, the losses may be derived from the reconstruction loss between true and predicted parametric human body model parameters and a regularization loss consisting of a Kullback-Leibler (KL) divergence loss. For example, the two regularization losses associated with the category of the goal object 120B and the size of the goal object 120B may be given by following equations (3, (4), and (5), as follows:

$$l = l_{rec} + l_{reg} \qquad (3)$$

$$l_{rec} = l_t + \lambda_r l_r + \lambda_\theta l_\theta + \lambda_M l_M \qquad (4)$$

$$l_{reg} = \lambda_{kl} l_{kl} + \lambda_{action} l_{action} + \lambda_{center} l_{center} + \lambda_{bbox} l_{bbox} + \lambda_{class} l_{class} \qquad (5)$$

Where $l_{rec}$ is an $\ell1$ reconstruction loss between true and predicted parametric human body model (SMPL-X) parameters;

$l_t$ is for global translation;

$l_r$ is for global orientation;

$l_\theta$ is for body posture;

$l_M$ is for canonical mesh vertices;

$l_{reg}$ is a regularization loss consisting of a Kullback - Leibler divergence term i.e., $l_{kl}$; $l_{action}$ is a cross-entropy loss for action classes 428;

$l_{center}$ is the mean squared error for the goal object center 426;

$l_{bbox}$ is the mean squared error for the goal object bounding box 424 corner coordinates;

$l_{class}$ is a cross-entropy loss for goal object class 422 with categories.

FIG. 5 is a diagram that illustrates an exemplary scenario of inference of the system for human motion generation with open vocabulary scene and text contexts, in accordance with an embodiment of the disclosure. FIG. 5 is described in conjunction with elements from FIG. 1, FIG. 2, FIG. 3, and FIG. 4. With reference to FIG. 5, there is shown the exemplary flow 500. The method illustrated in the exemplary environment 500 may be performed by any suitable system, apparatus, or device, such as, by the example system 102 of FIG. 1, or processor 202 of FIG. 2.

The system 102 may use a fusion module 502 to concatenate the second scene features with the text features to obtain a concatenated feature. The second scene feature may be obtained by down sampling of the first scene features. Further, the text features may be generated based on application of the text encoder of the pre-trained vision-language model on the tokenized text. Further, the fusion module 502 may apply a self-attention layer on the concatenated feature to obtain the fused feature. Further, the conditional latent 504 may be generated based on the fused feature. In an embodiment, the fusion module 502 may pass the concatenated feature and the position information of each 3D point of the 3D point cloud through dense ReLU and linear layers to obtain the fused features. The system 102 may take the tokenized text (L) 402 and the 3D point cloud (S) 406 as an input and provide a conditional latent 504 on as an output. Furthermore, the system 102 may apply a conditional motion generator 506 on the conditional latent 504 to predict a sequence of motion parameters for the motion of the parametric human body model towards the goal object 120B for a specific time duration.

In an embodiment, the conditional motion generator 506 may use the motion parameters 420 and the conditional latent 504 to provide reconstructed motion parameters 508. Further, the system 102 may obtain 3D human meshes 512 for a plurality of motion frames 510 based on the sequence of motion parameters (i.e., reconstructed motion parameters 508) and the parametric human body model. The sequence of motion parameters and the parametric human body model may be obtained for each time step from a sequence of time steps i.es t1 till t7 as shown in at 510 in Fig, 5.

In an example embodiment, the system 102 may determine the goal object 120B based on the text description (such as, the text 118A). Further, the conditional motion generator 506 of the system 102 may generate plurality of motion frames 510 in proximity of the goal object 120B. Furthermore, the system 102 may calculate the distance between the plurality of motion frames 510 and the determined goal object 102B. The system 102 may further obtain the 3D human meshes 512 that may be in close proximity to the goal object 102B based on the determined distance. For example, the distance may be calculated based on SMPL-X human body mesh sampled from random standard Gaussian latent, condition latent 504 at time step t, and a Signed Distance Function (SDF). The SDF may be evaluated based on subset of S corresponding to the goal object 120B in the text 118A (L). The system 102 determines the shortest distance, and if the shortest distance is negative, then the system 102 replace the shortest distance with zero to disregard the penetration. Further, the system 102 may use the last motion frame t = T for walk, sit or lie; and the first frame t = 1 for stand up.

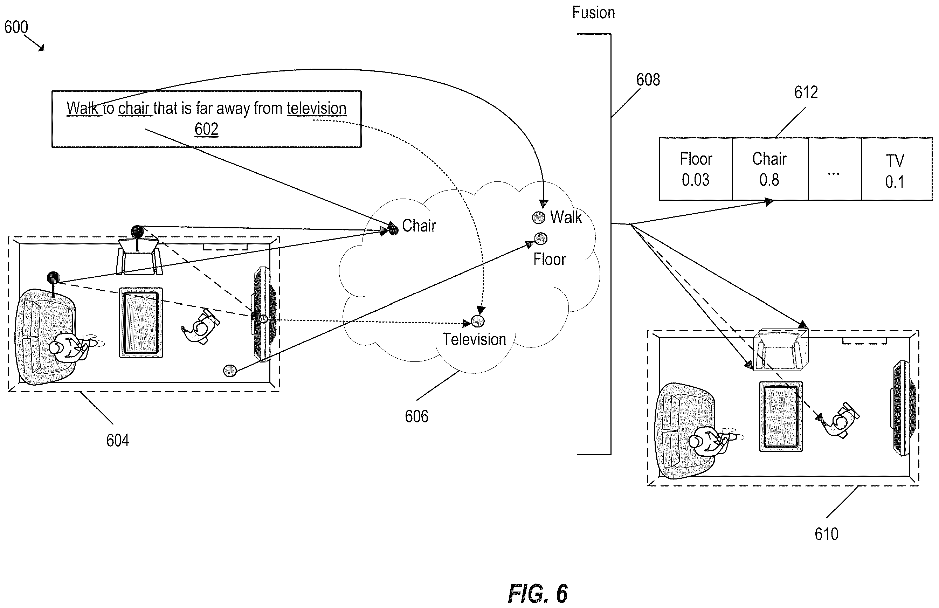

FIG. 6 is a diagram that illustrates an exemplary scenario of shared open vocabulary vision-language space with grounding, in accordance with an embodiment of the disclosure. FIG. 6 is described in conjunction with elements from FIG. 1, FIG. 2, FIG. 3, FIG. 4, and FIG. 5. With reference to FIG. 6, there is shown the exemplary architecture 600. The method illustrated in the exemplary architecture 600 may be performed by any suitable system, apparatus, or device, such as, by the example system 102 of FIG. 1, or processor 202 of FIG. 2. The architecture 600 may include a text input 602, a 3D point cloud 604 associated with a scene, an open vocabulary vision-language space 606 with grounding, a fusion 608 step, a second scene features 610, and text features 612.

The architecture 600 represents the open vocabulary grounding architecture that may be designed to enhance text-and-scene-conditional human motion generation. The system 102 may establish a text-scene relationship (grounding) before motion generation by leveraging the extensive grounding knowledge obtained by the pre-trained vision-language model 106 during the pre-training.

The system 102 may pre-train the vision-language model through pre-training the encoder 408A distilling knowledge from the open vocabulary semantic image segmentation model on dataset 118. Specifically, the system 102 may create a correspondence between 3D scene points and text-aligned 2D viewpoint pixels in embedding space, aligning the encoder 408A representations with the text encoder 404 of the vision-language model. Furthermore, the system 102 may fuse the text features 612 generated by the pre-trained vision-language model 106 and the second scene feature 610 obtained by down sampling of the first scene feature (that may be generated by the pre-trained U-Net scene encoder 108). Upon fusion of the features, the system 102 may finetune the pre-trained U-Net scene encoder 108 for text-and-scene-conditional human motion generation based on losses including two regularization losses associated with the category of the goal object 120B and the size of the goal object 120B (thus, grounding of the goal object 120B).

In an embodiment, the 600 architecture employs the shared open vocabulary vision-language space 606 for the text features 612 generated and the second scene features 610 generation, establishing initial relationship (grounding) between the text features 612 generated and the second scene features 610 generation. Further, for regularizing the relationship (grounding), the system 102 may classify and regress the bounding box corners of the goal object 120B in the second scene features 610.

In an embodiment, the system 102 may identify the goal object 120B as per the text input 602 and generate the human motion closer to the goal object 120B in the open vocabulary vision-language space 606 with grounding. Further, the human motion generated by the system 102 may have fine-grained orientation as shown at 610 in FIG. 6 associated with the text input 602.

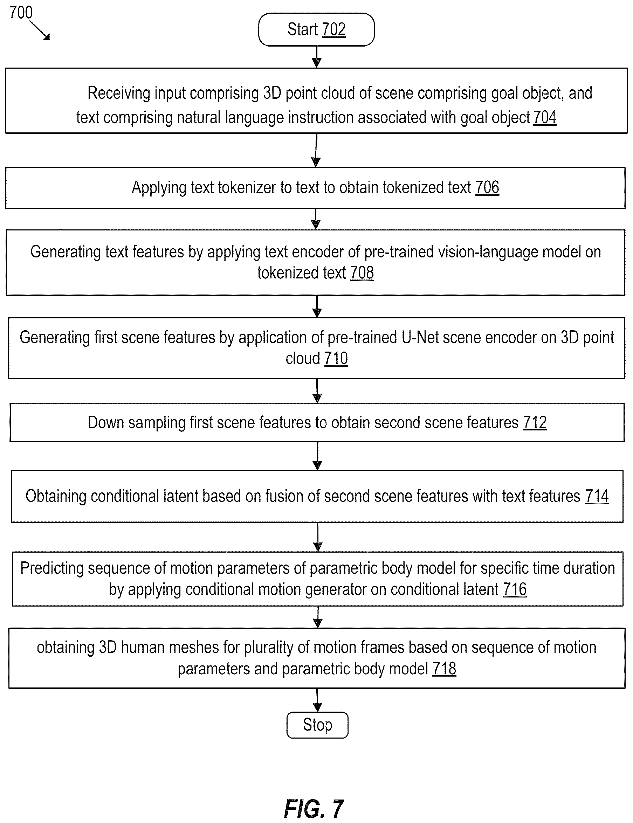

FIG. 7 is a diagram that illustrates a flowchart of an example for human motion generation with open vocabulary scene and text contexts, in accordance with an embodiment of the disclosure. FIG. 7 is described in conjunction with elements from FIG. 1, FIG. 2, FIG. 3, FIG. 4, FIG. 5, and FIG. 6. With reference to FIG. 7, there is shown the exemplary flow 700. The method illustrated in the exemplary flow 700 may be performed by any suitable system, apparatus, or device, such as, by the example system 102 of FIG. 1, or processor 202 of FIG. 2. Although illustrated with discrete blocks, the steps and operations associated with one or more of the blocks of the flow 700 may be divided into additional blocks, combined into fewer blocks, or eliminated, depending on the particular implementation. The operations may start at 702 and may proceed to 722.

At 704, input comprising 3D point cloud of a scene and text may be received by the system 102. The 3D point cloud of a scene comprising goal object, and the text comprising a natural language instruction associated with the goal object

At 706, a text tokenizer may be applied to the received text. The application of the text tokenizer on the text may be performed to obtain a tokenized text.

At 708, generating text features. The text features may be generated by application of a pre-trained U-Net scene encoder on the 3D point cloud.

At 710, generating first scene features. The first scene features may be generated by application of a pre-trained U-Net scene encoder on the 3D point cloud.

At 712, down sampling the first scene features to obtain second scene features.

At 714, obtaining a conditional latent based on a fusion of the second scene features with the text features.

At 716, predicting a sequence of motion parameters of a parametric body model for a specific time duration by applying a conditional motion generator on the conditional latent

At 718, obtaining 3D human meshes for a plurality of motion frames based on the sequence of motion parameters and the parametric body model.

It should be noted that the user device having the display device 208 is merely provided as an exemplary implementation of the system 102 of FIG. 1 and should not be construed as limiting for the scope of the disclosure. The present disclosure may also be applicable to other modifications, deletions, or additions to the display device 208, without a deviation from the scope of the present disclosure.

Embodiment described in the present discloser may be used in many application areas such as, animated videos or movies, video games, robotics, augmented reality, virtual reality, mixed reality for utilizing improved motion recovery systems for real-time applications where accurate global positioning, humanoid robot imitation Learning to enhancing the ability of robots to imitate human motions accurately. Further, the present discloser may be used in Text-to-Motion generation to create human motions based on textual descriptions for various interactive applications. The applications benefit mentioned above may provide ability to generate diverse and contextually accurate human motions based on language prompts and scene information.

Various embodiments of the disclosure may provide one or more non-transitory computer-readable storage media configured to store instructions that, in response to being executed, cause a system (such as the system 102) to perform operations. The operations may include receiving an input comparing a 3D point cloud of a scene comprising a goal object, and a text comprising a natural language instruction associated with the goal object. The operations may further include applying a text tokenizer to the text to obtain a tokenized text. The operations may further include generating text features by applying a text encoder of a pre-trained vision-language model on the tokenized text The operations may further include generating first scene features by application of a pre-trained U-Net scene encoder on the 3D point cloud. The operations may further include down sampling the first scene features to obtain second scene features. The operations may further include obtaining a conditional latent based on a fusion of the second scene features with the text features. The operations may further include predicting a sequence of motion parameters for a motion of a parametric human body model towards the goal object for a specific time duration by applying a conditional motion generator on the conditional latent. Furthermore, the operations may include obtaining 3D human meshes for a plurality of motion frames based on the sequence of motion parameters and the parametric human body model.

As indicated above, the embodiments described in the present disclosure may include the use of a special purpose or general-purpose computer (e.g., the processor 202 of FIG. 2) including various computer hardware or software modules, as discussed in greater detail below. Further, as indicated above, embodiments described in the present disclosure may be implemented using computer-readable media (e.g., the memory 204 or the dataset 118 or data input prepared based on the dataset 118) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the system 102. In some embodiments, the different components, modules, engines, and services described in the present disclosure may be implemented as objects or processes that execute on the system 102 (e.g., as separate threads). While some of the system 102 and methods described in the present disclosure are generally described as being implemented in software (stored on and/or executed by general purpose hardware), specific hardware implementations or a combination of software and specific hardware implementations are also possible and contemplated. In this description, a "computing entity" may be any system 102 as previously defined in the present disclosure, or any module or combination of modulates running on the system 102.

Additionally, if a specific number of an introduced claim recitation is intended, such an intent will be explicitly recited in the claim, and in the absence of such recitation no such intent is present For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executed by at least one processor, comprising:

   receiving an input comprising:

      a 3D point cloud of a scene comprising a goal object, and
      a text comprising a natural language instruction associated with the goal object;

   applying a text tokenizer to the text to obtain a tokenized text;
   generating text features by applying a text encoder of a pre-trained vision-language model on the tokenized text;
   generating first scene features by application of a pre-trained U-Net scene encoder on the 3D point cloud;
   down sampling the first scene features to obtain second scene features;
   obtaining a conditional latent based on a fusion of the second scene features with the text features;
   predicting a sequence of motion parameters for a motion of a parametric human body model towards the goal object for a specific time duration by applying a conditional motion generator on the conditional latent; and
   obtaining 3D human meshes for a plurality of motion frames based on the sequence of motion parameters and the parametric human body model.

2. The method according to claim 1, wherein the pre-trained vision-language model is a Contrastive Language-Image Pre-Training (CLIP) model.

3. The method according to claim 1, wherein the pre-trained U-Net scene encoder is a Point Transformer-based neural network.

4. The method according to claim 1, further comprising feeding position and color information of each 3D point of the 3D point cloud to the pre-trained U-Net scene encoder to generate the first scene features which include a point feature vector for each 3D point of the 3D point cloud.

5. The method according to claim 1, further comprising:

   selecting a 3D point from the 3D point cloud;
   extracting a point feature vector of the 3D point by applying a U-Net scene encoder on position and color information of the 3D point;
   obtaining images that correspond to the 3D point;
   extracting image feature vectors by applying an image encoder of the pre-trained vision-language model on the images; and
   obtaining the pre-trained U-Net scene encoder by pre-training the U-Net scene encoder until a distance between the image feature vectors and the point feature vector is a minimum.

6. The method according to claim 1, wherein the down sampling comprises:

   performing a random selection of a set of point feature vectors from a plurality of point feature vectors included in the first scene features;
   calculating a distance between each point feature vector of the set of point feature vectors and other point feature vectors in the plurality of point feature vectors;
   selecting, around each point feature vector of the set of point feature vectors, a set of k-nearest neighboring vectors from the plurality of point feature vectors based on the distance; and
   applying an average pooling operation on the set of k-nearest neighboring vectors around each point feature vector of the set of point feature vectors to obtain a plurality of average pooled vectors,

   wherein the second scene features include the plurality of average pooled vectors.

7. The method according to claim 1, wherein the down sampling is performed using a k-nearest neighbor classifier.

8. The method according to claim 1, wherein the fusion of the second scene features with the text features comprises:

   concatenating the second scene features with the text features to obtain a concatenated feature; and
   applying a self-attention layer on the concatenated feature to obtain a fused feature, wherein the conditional latent is generated based on the fused feature.

9. The method according to claim 1, further comprising finetuning the pre-trained U-Net scene encoder for text-and-scene-conditional human motion generation based on losses including two regularization losses associated with a category of the goal object and a size of the goal object

10. One or more non-transitory computer-readable storage media configured to store instructions that, in response to being executed, cause a system to perform operations, the operations comprising:

    receiving an input comprising:

       a 3D point cloud of a scene comprising a goal object, and
       a text comprising a natural language instruction associated with the goal object;

    applying a text tokenizer to the text to obtain a tokenized text;
    generating text features by applying a text encoder of a pre-trained vision-language model on the tokenized text;
    generating first scene features by application of a pre-trained U-Net scene encoder on the 3D point cloud;
    down sampling the first scene features to obtain second scene features;
    obtaining a conditional latent based on a fusion of the second scene features with the text features;
    predicting a sequence of motion parameters for a motion of a parametric human body model towards the goal object for a specific time duration by applying a conditional motion generator on the conditional latent; and
    obtaining 3D human meshes for a plurality of motion frames based on the sequence of motion parameters and the parametric human body model.

11. The one or more non-transitory computer-readable storage media according to claim 10, wherein the pre-trained vision-language model is a Contrastive Language-Image Pre-Training (CLIP) model.

12. The one or more non-transitory computer-readable storage media according to claim 10, wherein the pre-trained U-Net scene encoder is a Point Transformer-based encoder-decoder neural network.

13. The one or more non-transitory computer-readable storage media according to claim 10, whether the operations further comprise feeding position and color information of each 3D point of the 3D point cloud to the pre-trained U-Net scene encoder to generate the first scene features which include a point feature vector for each 3D point of the 3D point cloud.

14. The one or more non-transitory computer-readable storage media according to claim 10, whether the operations further comprise:

selecting a 3D point from the 3D point cloud;
extracting a point feature vector of the 3D point by applying a U-Net scene encoder on position and color information of the 3D point;
obtaining images that correspond to the 3D point;
extracting image feature vectors by applying an image encoder of the pre-trained vision-language model on the images; and
obtaining the pre-trained U-Net scene encoder by pre-training the U-Net scene encoder until a distance between the image feature vectors and the point feature vector is a minimum.

15. The one or more non-transitory computer-readable storage media according to claim 10, wherein the down sampling comprises:

performing a random selection of a set of point feature vectors from a plurality of point feature vectors included in the first scene features;
calculating a distance between each point feature vector of the set of point feature vectors and other point feature vectors in the plurality of point feature vectors;
selecting, around each point feature vector of the set of point feature vectors, a set of k-nearest neighboring vectors from the plurality of point feature vectors based on the distance; and
applying an average pooling operation on the set of k-nearest neighboring vectors around each point feature vector of the set of point feature vectors to obtain a plurality of average pooled vectors,

wherein the second scene features include the plurality of average pooled vectors.

16. The one or more non-transitory computer-readable storage media according to claim 10, wherein the down sampling is performed using a k-nearest neighbor classifier.

17. The one or more non-transitory computer-readable storage media according to claim 10, wherein the fusion of the second scene features with the text features comprises:

concatenating the second scene features with the text features to obtain a concatenated feature; and
applying a self-attention layer on the concatenated feature to obtain a fused feature, wherein the conditional latent is generated based on the fused feature.

18. The one or more non-transitory computer-readable storage media according to claim 10, whether the operations further comprise finetune the pre-trained U-Net scene encoder for text-and-scene-conditional human motion generation based on losses including regularization losses associated with a category of the goal object and a size of the goal object.

19. A system, comprising:

a memory storing instructions; and
a processor, coupled to the memory, which executes the instructions to perform a process comprising:

receiving an input comprising:

> a 3D point cloud of a scene comprising a goal object, and
> a text comprising a natural language instruction associated with the goal object;

applying a text tokenizer to the text to obtain a tokenized text;
generating text features by applying a text encoder of a pre-trained vision-language model on the tokenized text;
generating first scene features by application of a pre-trained U-Net scene encoder on the 3D point cloud;
down sampling the first scene features to obtain second scene features;
obtaining a conditional latent based on a fusion of the second scene features with the text features;
predicting a sequence of motion parameters for a motion of a parametric human body model towards the goal object for a specific time duration by applying a conditional motion generator on the conditional latent; and
obtaining 3D human meshes for a plurality of motion frames based on the sequence of motion parameters and the parametric human body model.

20. The system according to claim 19, wherein the process further comprises:

selecting a 3D point from the 3D point cloud;
extracting a point feature vector of the 3D point by applying a U-Net scene encoder on position and color information of the 3D point;
obtaining images that correspond to the 3D point;
extracting image feature vectors by applying an image encoder of the pre-trained vision-language model on the images; and
obtaining the pre-trained U-Net scene encoder by pre-training the U-Net scene encoder until a distance between the image feature vectors and the point feature vector is a minimum.

FIG. 1

200

Communication Network 122

System 102

Network Interface 210

Processor 202

I/O Device 206

Display Device 208

Memory 204

Pre-trained Vision-Language Model 106

Pre-trained U-Net Scene Encoder 108

Fusion Module 112

Conditional Motion Generator 114

*FIG. 2*

300

Start 302

Receive 3D point Cloud 304

Select 3D point (i) from 3D point cloud 306

Extract point feature vector by applying U-Net scene encoder on position and color information of 3D point 308

Obtain images that correspond to 3D point 310

Extract image feature vectors by applying image encoder of pre-trained vision language model on images 312

Determine distance between the image feature vectors and the point feature vector 314

Minimize distance between the image feature vectors and the point feature vector 316

Next (i+1) 316A

Obtain pre-trained U-Net scene encoder by pre-training the U-Net scene encoder 318

Stop

*FIG. 3*

FIG. 4

*FIG. 5*

Walk to chair that is far away from television
602

Fusion

608

612

| Floor 0.03 | Chair 0.8 | ... | TV 0.1 |

600

Chair

Walk

Floor

Television

606

604

610

EP 4 625 354 A1

*FIG. 6*

700

Start 702

Receiving input comprising 3D point cloud of scene comprising goal object, and text comprising natural language instruction associated with goal object 704

Applying text tokenizer to text to obtain tokenized text 706

Generating text features by applying text encoder of pre-trained vision-language model on tokenized text 708

Generating first scene features by application of pre-trained U-Net scene encoder on 3D point cloud 710

Down sampling first scene features to obtain second scene features 712

Obtaining conditional latent based on fusion of second scene features with text features 714

Predicting sequence of motion parameters of parametric body model for specific time duration by applying conditional motion generator on conditional latent 716

obtaining 3D human meshes for plurality of motion frames based on sequence of motion parameters and parametric body model 718

Stop

*FIG. 7*

Europäisches
Patentamt
European
Patent Office
Office européen
des brevets

# EUROPEAN SEARCH REPORT

**Application Number**

EP 25 16 4929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZAN WANG ET AL: "Move as You Say, Interact as You Can: Language-guided Human Motion Generation with Scene Affordance", ARXIV.ORG, CORNELL UNIVERSITY LIBRARY, 201 OLIN LIBRARY CORNELL UNIVERSITY ITHACA, NY 14853, 26 March 2024 (2024-03-26), XP091711572, * Preliminaries and Method sections * ----- | 1-20 | INV. G06V10/80 G06V10/82 G06V40/20 |
| A | ZAN WANG ET AL: "HUMANISE: Language-conditioned Human Motion Generation in 3D Scenes", ARXIV.ORG, CORNELL UNIVERSITY LIBRARY, 201 OLIN LIBRARY CORNELL UNIVERSITY ITHACA, NY 14853, 18 October 2022 (2022-10-18), XP091347107, * the whole document * ----- | 1-20 | |
| A | HAN LIANG ET AL: "OMG: Towards Open-vocabulary Motion Generation via Mixture of Controllers", ARXIV.ORG, CORNELL UNIVERSITY LIBRARY, 201 OLIN LIBRARY CORNELL UNIVERSITY ITHACA, NY 14853, 19 March 2024 (2024-03-19), XP091703171, * the whole document * ----- | 1-20 | TECHNICAL FIELDS SEARCHED (IPC)<br><br>G06V |
| A | WENTAO ZHU ET AL: "Human Motion Generation: A Survey", ARXIV.ORG, CORNELL UNIVERSITY LIBRARY, 201 OLIN LIBRARY CORNELL UNIVERSITY ITHACA, NY 14853, 20 July 2023 (2023-07-20), XP091569393, * the whole document * ----- | 1-20 | |

The present search report has been drawn up for all claims

| Place of search | Date of completion of the search | Examiner |
|---|---|---|
| The Hague | 26 June 2025 | Mitzel, Dennis |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63571353